# EUROPEAN PATENT SPECIFICATION

(11) **EP 2 595 444 B1**
(45) Date of publication and mention of the grant of the patent: **17.07.2019**
(21) Application number: 11368027.6
(22) Date of filing: 21.11.2011
(51) Int. Cl.: H04W 8/18, H04W 76/00, H04W 8/06, H04W 48/18, H04W 88/06

(54) **METHOD AND SYSTEM FOR ALLOWING A USER OF A MOBILE TERMINAL TO BENEFIT FROM SERVICES OF A FOREIGN MOBILE NETWORK AS A REGULAR SUBSCRIBER THEREOF**
VERFAHREN UND SYSTEM, UM ES EINEM BENUTZER EINES MOBILEN ENDGERÄTS ZU ERMÖGLICHEN, DIENSTE EINES FREMDEN MOBILFUNKNETZES ALS REGELMÄSSIGER TEILNEHMER DAVON ZU NUTZEN
PROCÉDÉ ET SYSTÈME PERMETTANT À UN UTILISATEUR D'UN TERMINAL MOBILE DE BÉNÉFICIER DE SERVICES D'UN RÉSEAU MOBILE ÉTRANGER EN TANT QU'ABONNÉ RÉGULIER DE CELUI-CI

(43) Date of publication of application: 22.05.2013
(73) Proprietor: IQSM, 06410 Biot (FR)
(72) Inventor: Manso, Laurent, 06570 Saint Paul (FR)
(74) Representative: Macquet, Christophe

(56) References cited:
- EP-A2- 1 850 607
- WO-A1-2006/094564

## Description

### FIELD OF THE INVENTION

The invention relates to a method and a system for allowing a user of a mobile terminal to benefit from services provided by a foreign locally accessible mobile network as a regular subscriber of said network. The method according to the invention constitutes a method which is alternate to roaming.

### BACKGROUND OF THE INVENTION

The mobile networks according to the invention are Public Land Mobile Networks (PLMNs) that are designed, for example, according to the Global System for Mobile Communications (GSM) standard or according to technologies that inherited from this standard and, in particular, third generation (3G) and Long Term Evolution (LTE) standards.

These mobile networks offer various telephony services including full compatibility with the public switched telephone network and SMS (short messages services). Generally, they offer the capability for mobile terminals to access web sites, download data from the web, benefit from MMS (Multimedia Message Services) and e-mail services.

A key concept in the architecture of PLMNs is the cell. Indeed, the PLMNs are composed of contiguous geographical areas called cells. For each cell of a PLMN, there is a base station transceiver. This base station is called BTS according to the GSM standard. It is called NodeB or eNodeB according to the 3G or LTE standards, respectively. The base stations communicate with all mobile terminals within a cell. The cell is finally the access point to the network for mobile terminals within its coverage.

Practically, a base station continuously requests identification and authentication from terminals that attempt to use its resource. These are terminals that belong to the same PLMN as the base or not. If the base station recognises a mobile terminal that belongs to the operator's network, the mobile terminal is then allowed to register with the network, using the base station as an access point, and to use the network's communication services as allowed by agreement with the user.

The mobile equipment generally contains a module, which is named, for example, subscriber identification module (SIM). This module is generally a smart card which is inserted in the mobile equipment. The identification data comprise a unique number, which is the international mobile subscriber identifier (IMSI). It also comprises a unique authentication key (Ki), which is associated with the IMSI. The IMSI is made up of three numbers: a country number, a number identifying the PLMN in its country and a number identifying the subscriber by the operator. The Ki is a 128-bit value.

For example, according to the GSM standard, for initial registration of a mobile terminal, the network obtains the IMSI from the SIM of the mobile terminal, and passes this to the mobile operator requesting access and authentication. The operator network searches its database for the incoming IMSI and its associated Kᵢ. It then generates a random number and signs it with Kᵢ associated with the IMSI, computing another number known as the signed response 1 (SRES_1). The operator network then sends the random number to the mobile terminal, which passes it to the SIM. The SIM signs it with its own Kᵢ, producing a signed response 2 (SRES_2), which it gives to the mobile terminal along with an encryption key K_{c}. The mobile terminal passes SRES_2 on to the operator network. The operator network then compares the computed response SRES_1 with the computed response SRES_2 that the mobile terminal returned. If the two numbers match, the SIM is authenticated and the mobile terminal is granted access to the operator's network. K_{c} is then used to encrypt all further communications between the mobile terminal and the network. Practically, the network may require the mobile terminal to authenticate every time an event is initiated, every so many events, or even after a certain time period has elapsed. Thus, the SIM is to be inserted in the mobile terminal for authentication all along time. Of course, other authentication methods do exist for standards other than the GSM.

A PLMN operates within an area defined as the territory of competency. Its coverage is limited by the borders of a territory, for example national borders. Outside these borders, a user, who wishes to benefit from services provided by a foreign locally accessible network and who is not a subscriber of said network, can still access communication and other services that are offered by the foreign locally accessible mobile network, if the local network operator concluded a roaming agreement with the user's own operator. According to such a roaming agreement, the user pays for what he has consumed plus what is called 'roaming fees' corresponding to costs of delivering this service. This might result in high communication costs for the user.

EP 1 850 607 A2 discloses a method for rerouting mobile phone communications, involving a GSM phone with a SIM allowing TCP/ IP connection and with dedicated software for connection with a central server controlling a SIM card array comprising a plurality of SIM's and for allowing the emulation of an image of a SIM to the GSM phone. WO 2006/094564 A1 discloses a method for rerouting mobile communications involving a GSM phone provided with a SIM allowing TCP/IP connection, which method provides for TCP/IP connection to a dedicated central server comprising a plurality of SIM's corresponding to different GSM networks and provides for the emulation of an image of a selected SIM to the GSM phone or a dedicated cooperating separate device, as a virtual SIM, in addition to the actual SIM provided in the GSM phone.

### SUMMARY OF THE INVENTION

The invention essentially provides a means for a user having a mobile terminal and being away from the coverage of its own PLMN to access communication services from a foreign PLMN as a regular subscriber thereof, thus benefiting from reduced communication costs as compared to 'roaming fees'.

To this aim, in accordance with a first aspect, the invention concerns a method according to claim 1.

In accordance with a second aspect, the invention concerns a system according to claim 8.

Preferred embodiments are set out in the dependent claims.

### BRIEF DESCRIPTION OF THE DRAWINGS

Other features and aspects of the present invention will be apparent from the following description and the accompanying drawings, in which:
Fig. 1 shows a system according an embodiment of the invention; and
Fig. 2 shows various steps of the method according to the invention.

### DETAILLED DESCRIPTION OF THE INVENTION

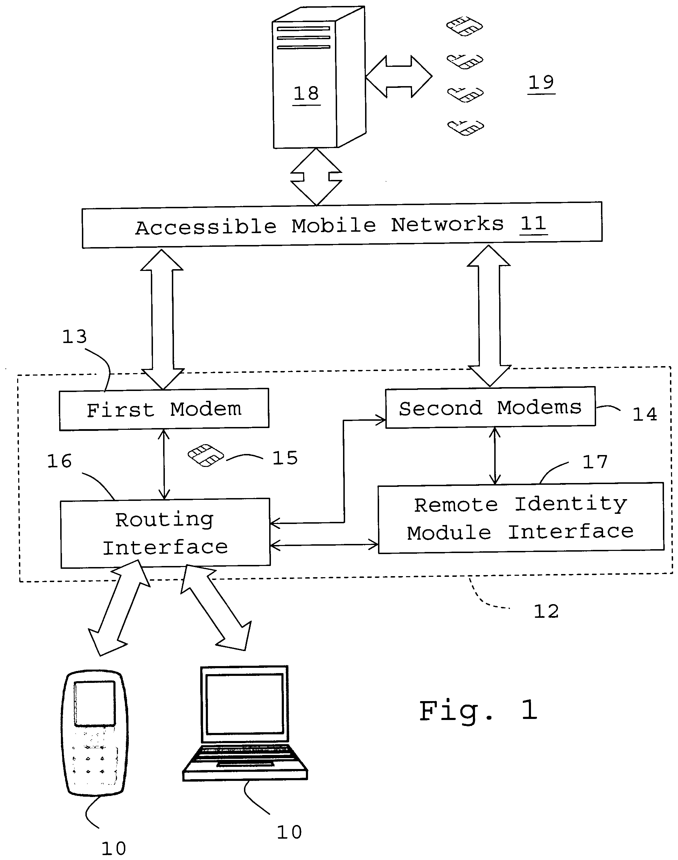

The invention concerns a method and a system for enabling users of mobile terminals 10 as shown in Fig. 1, to benefit from services provided by a foreign locally accessible mobile network 11, as regular subscribers of said network, without roaming.

The mobile terminals 10 are mobile devices, for example, mobile phones, smart phones, touch tablets, or personal computers, that may comprise a subscriber identification module or not.

The foreign locally accessible mobile network 11 is a PLMN. PLMNs according to the invention are cellular networks. It is for example a GSM network or a cellular network defined in standard others than the GSM standard for example a 3G, CDMA or LTE network. In this network, an operator provides mobile telephony services to subscribers, or other services and, in particular, short message services or access to the Internet, or transfer of digital data, for example using electronic messaging.

The system according to the invention comprises an apparatus 12.

The apparatus 12 comprises a first modem 13 and one or more second modems 14. The first is a cellular modem. The one or more second modems are cellular modems as well.

The apparatus 12 comprises a subscriber identity module 15. This module 15 is provided by an operator, which is generally not the foreign operator granting access to services within the foreign locally accessible mobile network. The module 15 is usually a smart card. However, it may be another physical of software means dedicated to identification of a subscriber. The module 15 is attached to the first modem 13. It means that the module 15 is inserted into a slot that is electrically connected to the first modem 13. Hence, the module 15 may send data in the network using said first modem 13 or receive data from this network through this modem 13.

The apparatus 12 further comprises a routing interface 16 for communication with the mobile terminals 10 that are hence connected with the apparatus 12. For example, this interface 16 is a physical interface such as a USB(TM) (Universal Serial Bus), Card Express(TM) or wired local network interface. In another example, this interface 16 is a wireless interface such as a WiFi(TM) or a Bluetooth(TM) interface.

The apparatus 12 also comprises a remote identity module interface 17. The remote identity interface 17 is electrically connected to the second modem 14 and to the routing interface 16. If the apparatus 12 comprises a plurality of second modems 17, then the remote identity interface 17 is connected to each of said second modems 14.

Finally, the apparatus 12 may comprise a battery and/or a power supply, as well as a chip for positioning the apparatus, for example, a Global Positioning Chip, which are not shown in Fig. 1.

The system according to the invention further comprises a remote server 18. This remote server 18 contains a plurality of subscriber identity modules 19. In an embodiment according to the invention, it contains more than 10 modules, for instance 20 modules. These modules are modules that belong to various operators of various PLMNs and that permit to register with the various mobile networks of these operators in the world. The server 18 is not necessarily located in the same place than the user. Generally, it is located in a country which is not the country where is located the user.

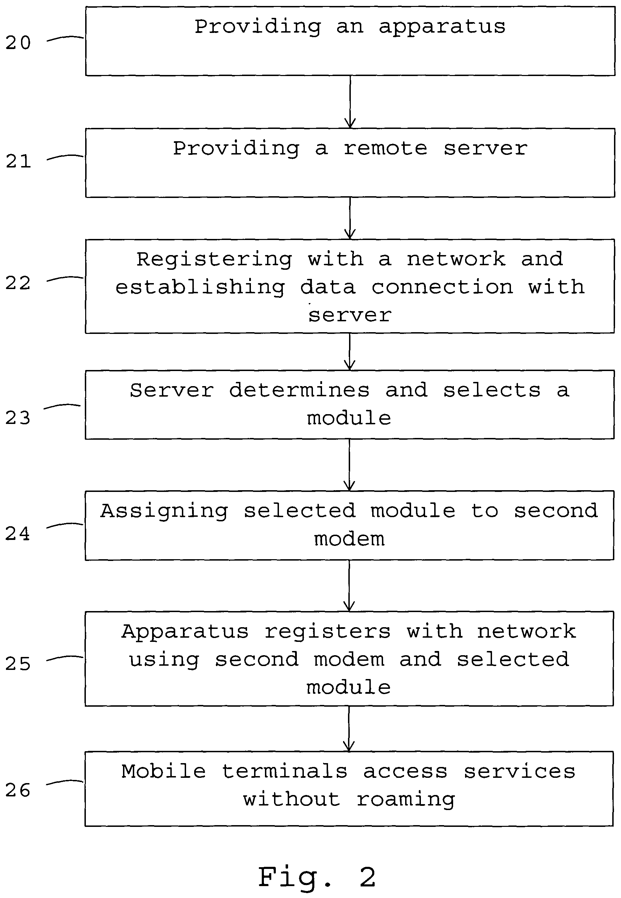

The method according to the invention comprises various steps, which are shown in Fig. 2.

According to a first and a second steps 20, 21, the apparatus 12 and the remote server 18 are provided.

According to further steps 22, the apparatus 12 is allowed to register with the or one of the foreign locally accessible mobile networks 11 using the first modem 13 and the subscriber identity module 15 attached to said first modem 13. As a result of the registration of the apparatus 12 with the foreign locally accessible mobile network 11, a data connection or data link is then established between the apparatus 12 and the remote server 18. This is a preliminary connection. This preliminary connection may necessitate roaming for creating the data link with the remote server 18.

If access to the Internet, for example through a WiFi(TM) connection or by other means is available, the apparatus 12 may connect the server 18 via the Internet instead of using the first modem 13.

According to other steps 23, in using the data connection with the remote server 18, the apparatus 12 provide the server 18 with some information. This information is allowing the server 18 to determine which subscriber identity module, among the subscriber identity modules 19 it contains, is registered for local benefit of the services provided by one of the foreign locally accessible mobile networks 11. This information may comprise the identity of the registered network, the identity of all or some accessible networks, the serial number of the apparatus 12, and its location. The location of the apparatus 12 may comprise GPS coordinates provided by the GPS internal chip of the apparatus 12. While connected to the server 18, said server may request additional information to the apparatus 12 about available networks and/or the modems 14 comprises in the apparatus 12. In such case, the apparatus 12 replies to the server 18 in providing the requested information.

On the basis of the provided information, the remote server 18 selects at least one accurate locally accessible mobile network 11 and one subscriber identity module among the modules 19 it stores, that will allow a mobile terminal 10 to access services in said locally accessible network. The selected locally accessible network is advantageously the most appropriate network for the user's usage.

To that effect, according to step 24, the selected subscriber module is assigned to one of the second modems 14.

If there are a plurality of second modems 14, a module may be assigned to each of the second modems in the apparatus. The apparatus 12 will use each modem 14 in accordance with the configuration it receives from the server 18 using one of the following modes: data or voice/SMS/MMS.

The second modem 14 is then turned on and the apparatus 12 is allowed to register with the foreign locally accessible network using the second modem 14 and the selected subscriber identity module contained in the remote server 18 assigned to this modem.

For example, in the particular case where the network 11 is a GSM network, the registration process is as follows: the network requests the IMSI from the selected SIM 19 in the server 18. This IMSI is provided by the server 18 to the apparatus 12 and then passed to the mobile operator of the network 11 requesting access and authentication. The network operator searches its database for the incoming IMSI and its associated Kᵢ. It should find these, as the SIM as been selected, due to the fact that it belongs to the foreign operator. The network then generates a random number and signs it with Kᵢ associated with the IMSI, computing another number known as the signed response 1 (SRES_1). The operator network then sends the random number to the apparatus, which passes it to the server 18 and to the selected SIM. The SIM signs it with its own Kᵢ, producing a signed response 2 (SRES_2), which it gives to the apparatus 12 along with an encryption key K_{c}. The apparatus passes SRES_2 on to the network 11. The network then compares the computed response SRES_1 with the computed response SRES_2 that the apparatus 12 returned. If the two numbers match, the SIM is authenticated and the apparatus 12, and therefore the mobile terminal 10, is granted access to the network services. K_{c} is used to encrypt all further communications between the apparatus 12 and the network 11. Generally, the network requires the apparatus 12 to authenticate every time an event is initiated, every so many events, or even after a certain time period has elapsed. Thus, the apparatus 12 should be in connection with the server 18 for authentication all along time.

Upon registration, the corresponding service, data or voice/SMS is available to the apparatus. Data channels are advantageously bundled in order to aggregate the bandwidth available and to provide single data channel. Thus the mobiles terminals are accessing services without roaming as shown in step 26.

On apparatus 12, the connection to the server 18 is maintained as far as possible in order to maintain the modules 19 connected to the second modems 14. Once a secondary data connection is established through the second modems, the apparatus 12 may stop using the first modem for connecting the server 18, and turn it off. The secondary data connection is then used to maintain the connection with the server 18 and maintain the subscriber identity module attached to the second modem or any other modem.

## Claims

1. A method for allowing a user of a mobile terminal (10) to benefit from services provided by a foreign locally accessible mobile network (11) as a regular subscriber of said network (11), comprising the steps of:
providing a mobile terminal (10);
providing an apparatus (12), said apparatus (12) comprising a first modem (13), a second modem (14) and a physical subscriber identity module (15) inserted into a slot that is electrically connected to said first modem (13), the first and second modems (13, 14) being cellular modems, the physical subscriber identity module (15) comprised in the apparatus (12) being attached to said first modem (13), and said apparatus further comprising a wireless routing interface (16) for communication with the mobile terminal (10);
providing a remote server (18), said remote server (18) containing a plurality of subscriber identity modules (19);
connecting the mobile terminal (10) with the apparatus (12) using the wireless interface (16);
registering the apparatus (12) with a foreign locally accessible mobile network (11) using the first modem (13) and the subscriber identity module (15) attached to said first modem (13), and establishing a data connection between the apparatus (12) and the remote server (18);
in using said data connection, providing the remote server (18) with an information allowing said remote server (18) to determine which subscriber identity module, among the subscriber identity modules (19) it contains, is allowing local benefit of the services provided by the foreign locally accessible mobile network (11), and selecting, within the plurality of subscriber identity modules (19), said subscriber identity module;
assigning the selected subscriber identity module to the second modem (14);
registering the apparatus (12) with said foreign locally accessible mobile network (11) using the second modem (14) and the selected subscriber identity module; and
allowing the user of the mobile terminal (10) to benefit from services provided by said foreign locally accessible mobile network (11),
wherein the data connection to the remote server (18) is maintained in order to maintain the selected subscriber identity module (19) connected to the second modem (14).

2. The method of claim 1, wherein the mobile terminal (10) is a mobile phone, a smart phone, a touch tablet, or a personal computer.

3. The method according to claim 1, wherein the foreign locally accessible mobile network (11) is a GSM, CDMA network, 3G or LTE network.

4. The method of claim 1, wherein the subscriber identity modules (19) contained in the remote server (18) are subscriber identity modules that belong to various operators of various mobile networks.

5. The method of claim 1, wherein the data connection to the remote server (18) is achieved through the Internet.

6. The method of claim 1, wherein the information comprises the identity of the registered network, the identity of all or some accessible networks, the serial number of the apparatus (12), and /or its location.

7. The method according to claim 6, wherein the information comprises the location of the apparatus (12) and said location comprises GPS coordinates provided a GPS internal chip of the apparatus (12).

8. A system for allowing a user of a mobile terminal (10) to benefit from services provided by a foreign locally accessible mobile network (11) as a regular subscriber of said network (11), comprising:
an apparatus (12), said apparatus (12) comprising a first modem (13), a second modem (14) and a physical subscriber identity module (15) inserted into a slot that is electrically connected to said first modem (13), the first and second modems (13, 14) being cellular modems, the physical subscriber identity module (15) being attached to said first modem (13), said apparatus further comprising a wireless routing interface (16) for communication with the mobile terminal (10);
a remote server (18), said remote server (18) containing a plurality of subscriber identity modules (19); and
a mobile terminal (10), said mobile terminal (10) being connected to the apparatus (12) using the wireless routing interface (16),
wherein the apparatus (12) is configured to register with the foreign locally accessible mobile network (11) using the first modem (13) and the subscriber identity module (15) attached to said modem (13), establish a data connection with the remote server (18), and wherein the remote server (18) is configured to determine which subscriber identity module, among the subscriber identity modules (19) it contains, is allowing local benefit of the services provided by a foreign locally accessible mobile network (11), and select, within the plurality of subscriber identity modules (19), a subscriber identity module (19) it contains and assign said subscriber identity module (19) to the second modem (14) for registration with a foreign locally accessible mobile network (11) and allowing the user of the mobile terminal (10) to benefit from services provided by said foreign locally accessible mobile network (11), the apparatus further being configured to maintain the data connection to the remote server (18) in order to maintain the selected subscriber identity module (19) connected to the second modem (14).

## Patentansprüche

1. Verfahren, um es einem Benutzer eines mobilen Endgeräts (10) zu ermöglichen, Dienste, die von einem fremden, lokal zugänglichen Mobilfunknetz (11) bereitgestellt werden, als regelmäßiger Teilnehmer des Netzes (11) zu nutzen, umfassend die folgenden Schritte:
Bereitstellen eines mobilen Endgeräts (10);
Bereitstellen einer Einrichtung (12), wobei die Einrichtung (12) ein erstes Modem (13), ein zweites Modem (14) und ein Identitätsmodul für einen physischen Teilnehmer (15) umfasst, das in einen Slot eingeführt wird, der elektrisch mit dem ersten Modem (13) verbunden ist, wobei das erste und zweite Modem (13, 14) Funkmodems sind, wobei das Identitätsmodul für einen physischen Teilnehmer (15), das in der Einrichtung (12) enthalten ist, an dem ersten Modem (13) angebracht ist, und die Einrichtung weiter eine drahtlose Routing-Schnittstelle (16) zur Kommunikation mit dem mobilen Endgerät (10) umfasst;
Bereitstellen eines Fernservers (18), wobei der Fernserver (18) eine Vielzahl von Teilnehmeridentitätsmodulen (19) enthält;
Verbinden des mobilen Endgeräts (10) mit der Einrichtung (12) unter Verwendung der drahtlosen Schnittstelle (16);
Registrieren der Einrichtung (12) mit einem fremden, lokal zugänglichen Mobilfunknetz (11) unter Verwendung des ersten Modems (13) und des Identitätsmoduls für den Teilnehmer (15), das an dem ersten Modem (13) angebracht ist, und Erstellen einer Datenverbindung zwischen der Einrichtung (12) und dem Fernserver (18);
bei Verwendung der Datenverbindung Versehen des Fernservers (18) mit einer Information, die es dem Fernserver (18) ermöglicht, zu bestimmen, welches Teilnehmeridentitätsmodul aus den Teilnehmeridentitätsmodulen (19), das er enthält, die lokale Nutzung der Dienste ermöglicht, die von dem fremden, lokal zugänglichen Mobilfunknetz (11) bereitgestellt werden, und Auswählen innerhalb der Vielzahl von Teilnehmeridentitätsmodulen (19) des Teilnehmeridentitätsmoduls;
Zuweisen des ausgewählten Teilnehmeridentitätsmoduls zu dem zweiten Modem (14);
Registrieren der Einrichtung (12) mit dem fremden, lokal zugänglichen Mobilfunknetz (11) unter Verwendung des zweiten Modems (14) und des ausgewählten Teilnehmeridentitätsmoduls; und
Ermöglichen, dass der Benutzer des mobilen Endgeräts (10) Dienste, die von dem fremden, lokal zugänglichen Mobilfunknetz (11) bereitgestellt werden, nutzt,
wobei die Datenverbindung mit dem Fernserver (18) gehalten wird, um das ausgewählte Teilnehmeridentitätsmodul (19) zu halten, das mit dem zweiten Modem (14) verbunden ist.

2. Verfahren nach Anspruch 1, wobei das mobile Endgerät (10) ein Mobiltelefon, ein Smartphone, ein Touch-Tablet, oder ein PC ist.

3. Verfahren nach Anspruch 1, wobei das fremde, lokal zugängliche Mobilfunknetz (11) ein GSM, CDMA-Netzwerk, 3G oder LTE Netzwerk ist.

4. Verfahren nach Anspruch 1, wobei die Teilnehmeridentitätsmodule (19), die in dem Fernserver (18) enthalten sind, Teilnehmeridentitätsmodule sind, die unterschiedlichen Anbietern von unterschiedlichen Mobilfunknetzen angehören.

5. Verfahren nach Anspruch 1, wobei die Datenverbindung mit dem Fernserver (18) durch das Internet erreicht wird.

6. Verfahren nach Anspruch 1, wobei die Information die Identität des registrierten Netzes, die Identität aller oder einiger zugänglicher Netze, die Seriennummer der Einrichtung (12) und/oder deren Standort umfasst.

7. Verfahren nach Anspruch 6, wobei die Information den Standort der Einrichtung (12) umfasst, und der Standort GPS-Koordinaten umfasst, die einem internen GPS-Chip der Einrichtung (12) bereitgestellt werden.

8. System, um es einem Benutzer eines mobilen Endgeräts (10) zu ermöglichen, Dienste, die von einem fremden, lokal zugänglichen Mobilfunknetz (11) bereitgestellt werden, als regelmäßiger Teilnehmer des Netzes (11) zu nutzen, umfassend:
eine Einrichtung (12), wobei die Einrichtung (12) ein erstes Modem (13), ein zweites Modem (14) und ein Identitätsmodul für einen physischen Teilnehmer (15) umfasst, das in einen Slot eingeführt wird, der elektrisch mit dem ersten Modem (13) verbunden ist, wobei das erste und zweite Modem (13, 14) Funkmodems sind, wobei das Identitätsmodul für einen physischen Teilnehmer (15) an dem ersten Modem (13) angebracht ist, wobei die Einrichtung weiter eine drahtlose Routing-Schnittstelle (16) zur Kommunikation mit dem mobilen Endgerät (10) umfasst;
einen Fernserver (18), wobei der Fernserver (18) eine Vielzahl von Teilnehmeridentitätsmodulen (19) enthält; und
ein mobiles Endgerät (10), wobei das mobile Endgerät (10) unter Verwendung der drahtlosen Routing-Schnittstelle (16) mit der Einrichtung (12) verbunden ist,
wobei die Einrichtung (12) konfiguriert ist, um mit dem fremden, lokal zugänglichen Mobilfunknetz (11) unter Verwendung des ersten Modems (13) und des Identitätsmoduls für den Teilnehmer (15), das an dem ersten Modem (13) angebracht ist, zu registrieren, eine Datenverbindung mit dem Fernserver (18) aufzubauen, und wobei der Fernserver (18) konfiguriert ist, um zu bestimmen, welches Teilnehmeridentitätsmodul aus den Teilnehmeridentitätsmodulen (19), das er enthält, die lokale Nutzung der Dienste ermöglicht, die von einem fremden, lokal zugänglichen Mobilfunknetz (11) bereitgestellt werden, und innerhalb der Vielzahl von Teilnehmeridentitätsmodulen (19) ein Teilnehmeridentitätsmodul (19) auszuwählen, das er enthält, und das Teilnehmeridentitätsmodul (19) dem zweiten Modem (14) zum Registrieren mit einem fremden, lokal zugänglichen Mobilfunknetz (11) zuzuweisen, und es dem Benutzer des mobilen Endgeräts (10) zu ermöglichen, Dienste, die von dem fremden, lokal zugänglichen Mobilfunknetz (11) bereitgestellt werden, zu nutzen, wobei die Einrichtung weiter konfiguriert ist, um die Datenverbindung mit dem Fernserver (18) zu halten, um das ausgewählte Teilnehmeridentitätsmodul (19), das mit dem zweiten Modem (14) verbunden ist, zu halten.

## Revendications

1. Procédé pour permettre à un utilisateur d'un terminal mobile (10) de bénéficier de services fournis par un réseau mobile étranger accessible localement (11) en tant qu'abonné régulier dudit réseau (11), comprenant les étapes suivantes :
la fourniture d'un terminal mobile (10) ;
la fourniture d'un appareil (12), ledit appareil (12) comprenant un premier modem (13), un second modem (14) et un module d'identité d'abonné physique (15) inséré dans un logement qui est connecté électriquement audit premier modem (13), les premier et second modems (13, 14) étant des modems cellulaires, le module d'identité d'abonné physique (15) compris dans l'appareil (12) étant relié audit premier modem (13), et ledit appareil comprenant en outre une interface de routage sans fil (16) pour la communication avec le terminal mobile (10) ;
la fourniture d'un serveur distant (18), ledit serveur distant (18) contenant une pluralité de modules d'identité d'abonné (19) ;
la connexion du terminal mobile (10) à l'appareil (12) en utilisant l'interface sans fil (16) ;
l'enregistrement de l'appareil (12) avec un réseau mobile étranger accessible localement (11) en utilisant le premier modem (13) et le module d'identité d'abonné (15) relié audit premier modem (13), et l'établissement d'une connexion de données entre l'appareil (12) et le serveur distant (18) ;
en utilisant ladite connexion de données, la fourniture au serveur distant (18) d'une information permettant audit serveur distant (18) de déterminer quel module d'identité d'abonné, parmi les modules d'identité d'abonné (19) qu'il contient, permet de bénéficier localement des services fournis par le réseau mobile étranger accessible localement (11), et la sélection, au sein de la pluralité de modules d'identité d'abonné (19), dudit module d'identité d'abonné ;
l'attribution du module d'identité d'abonné sélectionné au second modem (14) ;
l'enregistrement de l'appareil (12) avec ledit réseau mobile étranger accessible localement (11) en utilisant le second modem (14) et le module d'identité d'abonné sélectionné ; et
le fait de permettre à l'utilisateur du terminal mobile (10) de bénéficier de services fournis par ledit réseau mobile étranger accessible localement (11),
dans lequel la connexion de données au serveur distant (18) est maintenue de manière à maintenir le module d'identité d'abonné sélectionné (19) connecté au second modem (14).

2. Procédé selon la revendication 1, dans lequel le terminal mobile (10) est un téléphone mobile, un téléphone intelligent, une tablette tactile ou un ordinateur personnel.

3. Procédé selon la revendication 1, dans lequel le réseau mobile étranger accessible localement (11) est un réseau CDMA, GSM, un réseau LTE ou 3G.

4. Procédé selon la revendication 1, dans lequel les modules d'identité d'abonné (19) contenus dans le serveur distant (18) sont des modules d'identité d'abonné qui appartiennent à divers opérateurs de divers réseaux mobiles.

5. Procédé selon la revendication 1, dans lequel la connexion de données au serveur distant (18) est obtenue par le biais d'Internet.

6. Procédé selon la revendication 1, dans lequel les informations comprennent l'identité du réseau enregistré, l'identité de la totalité ou certains des réseaux accessibles, le numéro de série de l'appareil (12), et/ou son emplacement.

7. Procédé selon la revendication 6, dans lequel les informations comprennent l'emplacement de l'appareil (12) et ledit emplacement comprend des coordonnées GPS fournies par une puce interne GPS de l'appareil (12).

8. Système pour permettre à un utilisateur d'un terminal mobile (10) de bénéficier de services fournis par un réseau mobile étranger accessible localement (11) en tant qu'abonné régulier dudit réseau (11), comprenant :
un appareil (12), ledit appareil (12) comprenant un premier modem (13), un second modem (14) et un module d'identité d'abonné physique (15) inséré dans un logement qui est connecté électriquement audit premier modem (13), les premier et second modems (13, 14) étant des modems cellulaires, le module d'identité d'abonné physique (15) étant relié audit premier modem (13), et ledit appareil comprenant en outre une interface de routage sans fil (16) pour la communication avec le terminal mobile (10) ;
un serveur distant (18), ledit serveur distant (18) contenant une pluralité de modules d'identité d'abonné (19) ; et
un terminal mobile (10), ledit terminal mobile (10) étant connecté à l'appareil (12) en utilisant l'interface de routage sans fil (16),
dans lequel l'appareil (12) est configuré pour s'enregistrer avec le réseau mobile étranger accessible localement (11) en utilisant le premier modem (13) et le module d'identité d'abonné (15) relié audit premier modem (13), établir une connexion de données avec le serveur distant (18), et dans lequel le serveur distant (18) est configuré pour déterminer quel module d'identité d'abonné, parmi les modules d'identité d'abonné (19) qu'il contient, permet de bénéficier localement des services fournis par un réseau mobile étranger accessible localement (11), et sélectionner, au sein de la pluralité de modules d'identité d'abonné (19), un module d'identité d'abonné (19) qu'elle contient et attribuer ledit module d'identité d'abonné (19) au second modem (14) pour l'enregistrement avec un réseau mobile étranger accessible localement (11) et permettant à l'utilisateur du terminal mobile (10) de bénéficier de services fournis par ledit réseau mobile étranger accessible localement (11), l'appareil étant configuré en outre pour maintenir la connexion de données au serveur distant (18) de manière à maintenir le module d'identité d'abonné sélectionné (19) connecté au second modem (14).
